# EUROPÄISCHE PATENTSCHRIFT

(11) **EP 2 222 973 B1**
(45) Veröffentlichungstag und Bekanntmachung des Hinweises auf die Patenterteilung: **26.02.2014**
(21) Anmeldenummer: 08860668.6
(22) Anmeldetag: 10.11.2008
(51) Int. Cl.: F16C 33/38, F16C 33/66, F16C 19/10, F16D 23/14

(54) **DAUERGESCHMIERTES KUPPLUNGSAUSRÜCKLAGER**
PERMANENTLY LUBRICATED CLUTCH RELEASE BEARING
BUTEE DE DEBRAYAGE A LUBRIFICATION PERMANENTE

(30) Priorität: 12.12.2007 DE 102007059875
(43) Veröffentlichungstag der Anmeldung: 01.09.2010
(73) Patentinhaber: Schaeffler Technologies AG & Co. KG, 91074 Herzogenaurach (DE)
(72) Erfinder: AMARO, Milton, 18070-295 Sorocaba (BR); SILVA, Leonardo, 18016-180 Sorocaba (BR)
(86) Internationale Anmeldenummer: PCT/EP2008/065201
(87) Internationale Veröffentlichungsnummer: WO 2009/074412

(56) Entgegenhaltungen:
- DE-A1- 1 575 500
- DE-A1- 2 057 620
- DE-A1- 2 119 917
- DE-A1- 19 542 323
- US-A- 2 224 704

## Beschreibung

### Gebiet der Erfindung

Die Erfindung bezieht sich auf ein dauergeschmiertes Kupplungsausrücklager mit einem ersten Laufring, einem zweiten Laufring, Wälzkörpern die in einem zwischen den beiden Laufringen definierten Bahnraum aufgenommen sind, und einer Käfigeinrichtung zur Führung der Wälzkörper innerhalb des genannten Bahnraumes. Insbesondere bezieht sich die Erfindung hierbei auf laufrichtungsgebundene kurzbauende Ausrücklager für Anwendungen im Kupplungs- und Getriebebereich die über einen langen Betriebszeitraum hinweg Laufbelastungen bei Drehzahlen von über 400 Umin⁻¹ standhalten.

Aus DE 25 24 917 A1 ist ein Ausrücklager der vorgenannten Art bekannt, das als solches Bestandteil eines Kupplungsmechanismus bildet und über eine Ausrückstruktur axial verlagerbar ist, wobei in Korrelation mit der durch einen Betätigungsmechanismus eingestellten Axialposition dieses Lagers ein Kupplungseingriffszustand einer Reibungskupplung eingestellt wird. Bei diesem bekannten Kupplungsausrücklager sind die beiden Laufringe als flache Ringscheiben ausgebildet und aus einem Lagerstahl gefertigt, wobei einer der beiden Laufringe mit einer Laufrille versehen ist in welcher die zugeordneten Wälzkörper abrollen. Die beiden Laufringe sind ferner durch eine Halteringstruktur zu einer Baugruppe zusammengefasst. Der aus dieser Druckschrift bekannte Lageraufbau zeichnet sich durch eine relativ kurze axiale Baulänge und eine hohe Steifigkeit in axialer Richtung aus.

Aus DE 1 575 500 ist ein Käfig für ein Kupplungsausrücklager bekannt der im Seitenbereich mit mehreren in Umfangsrichtung abfolgend angeordneten Spiralnuten versehen ist über welche Fett vom äußeren Randbereich des Lagers radial nach innen zurückgeführt werden soll.

Aus DE 2 057 620 ist ebenfalls ein Käfig für Kupplungsausrücklager bekannt. Dieser Käfig ist als Metallumformstruktur gefertigt und weist einen äußeren Ringbord auf an welchem mehrere nach außen herausragende Lappen ausgebildet sind. Durch diese Lappen wird ebenfalls Fett das sich im Außenrandbereich des Lagers befindet aufgegriffen und tendenziell zum Innenbereich des Lagers zurückgedrängt.

US 2 224 704 A zeigt ein Kupplungsausrücklager, das einen ersten Lagerlaufring, einen zweiten Lagerlaufring, Wälzkörper und eine Käfigeinrichtung aufweist. Der erste Lagerlaufring und der zweite Lagerlaufring sind als flache Ringscheiben ausgebildet. Die Wälzkörper sind zwischen den Lagerlaufringen in einem definierten Bauraum aufgenommen. Die Käfigeinrichtung ist durch einen Ringkörper gebildet, der in Umfangsrichtung abfolgende Wälzkörperfenster zur Führung der Wälzkörper innerhalb des Bauraums aufweist.

Der Erfindung liegt die Aufgabe zugrunde, Lösungen zu schaffen durch welche es möglich wird, ein axial kurzbauendes dauergeschmiertes Kupplungsausrücklager zu schaffen das hinsichtlich der Käfigeinrichtung in fertigungstechnischer Hinsicht kostengünstig herstellbar ist und das sich durch gute Laufeigenschaften sowie eine lange Lebensdauer auszeichnet.

Diese Aufgabe wird erfindungsgemäß gelöst durch ein Kupplungsausrücklager mit:
- einem ersten Lagerlaufring der als flache Ringscheibe ausgeführt ist,
- einem zweiten Lagerlaufring der ebenfalls als flache Ringscheibe ausgeführt ist,
- Wälzkörpern die in einem zwischen dem ersten Lagerlaufring und dem zweiten Lagerlaufring definierten Bahnraum aufgenommen sind, und
- einer Käfigeinrichtung die durch einen Ringkörper gebildet ist, wobei der Ringkörper mehrere in Umfangsrichtung abfolgende Wälzkörperfenster aufweist, zur Führung der Wälzkörper innerhalb des Bahnraumes, wobei sich dieses Ausrücklager dadurch auszeichnet, dass im *äußeren Randbereich des Ringkörpers eine Keilkette* aus mehreren in Umfangsrichtung abfolgenden Keilen *ausgebildet ist,* zwischen denen jeweils eine Fördertasche mit Fettdurchtrittsquerschnitten zwischen dem Außenumfang des Randbereichs und einem Käfigfenster ausgebildet ist, wobei jeder Keil außenseitig von einer Keilaußenwand und innenseitig von einer Keilinnenwand begrenzt ist und eine Keilspitze bildet, die in eine Lagerhauptlaufrichtung weist, wobei im Bereich der Keilspitze der Ringkörper mit einer nach außen offenen und die Keilspitze untergreifenden Durchbrechung versehen ist.

Dadurch wird es auf vorteilhafte Weise möglich, ein Kupplungsausrücklager zu schaffen, bei welchem unter Wirkung des Lagerkäfigs eine wirkungsvolle Reduzierung des Schmierstoffdruckes und eine besonders wirkungsvolle Rückförderung des bei hohen Lagerdrehzahlen unter der Wirkung von Fliehkräften nach außen abgedrängten Schmierstoffes zum Innenumfangsbereich des Lagers erreicht wird. Durch diese Maßnahme ergibt sich eine besonders wirkungsvolle Entlastung der äußeren Dichtungsstrukturen des Kupplungsausrücklagers. Durch diese Maßnahme wird insbesondere selbst bei einer vergleichsweise geringen, im Kupplungsausrücklager eingeschlossenen Rest-Fettmenge eine zuverlässige Schmierung des Lagers gewährleistet, da der Fettverlust im Bereich der äußeren Dichtrungen reduziert und die Schierstoffheranführung an die Wälzkörper verbessert wird.

Gemäß einem besonderen Aspekt der vorliegenden Erfindung sind die Wälzkörper als Kugeln ausgeführt. Die Wälzkörperfenster sind vorzugsweise so gestaltet, dass diese die Kugeln unter Belassung eines äußerst engen Bewegungsspaltes umsäumen. Um dem Käfig im Bereich der Wälzkörperfenster eine gewisse Elastizität in Umfangsrichtung zu verleihen, ist gemäß einem besonderen Aspekt der Erfindung der Käfig so gestaltet, dass die Innenumfangswand des Ringkörpers im Bereich der Wälzkörperfenster durchbrochen ist. Der Ringkörper der Käfigeinrichtung ist vorzugsweise so dimensioniert, dass dessen in Axialrichtung gemessene Wanddicke etwas geringer ist als der axiale Überstand der Keile über die Ringkörperseitenflächen.

Die erfindungsgemäße Käfigeinrichtung ist vorzugsweise aus einem Kunststoffmaterial gefertigt. Als Kunststoffmaterial wird hierbei vorzugsweise der Kunststoff PA 66 GF 25 verwendet. Es ist möglich, die Käfigeinrichtung so zu gestalten, dass die Innenumfangswandung als Lagerfläche fungiert, die in verbautem Zustand auf einem Innenführungsring geführt ist. Dieser Innenführungsring kann an einen der beiden Laufringe des Lagers angesetzt und durch diesen Laufring zentriert werden.

Der Innenbereich des Lagers ist vorzugsweise sowohl zum Außenrandbereich als auch zum Innenbereich des Lagers hin durch entsprechende Dichtungseinrichtungen abgedichtet. Der zwischen diesen Dichtungen eingeschlossene Lagerinnenraum wird vorzugsweise nahezu vollständig von der Käfigeinrichtung und den mit dieser umlaufenden Wälzkörpern erfasst. Die Käfigeinrichtung ist hierzu vorzugsweise so dimensioniert, dass deren axiale Breite auf Höhe der Keile lediglich geringfügig kleiner ist als die axiale Weite des zwischen den angrenzenden Innenflächen der Laufringe verbleibenden Ringraums.

Um eine besonders wirkungsvolle Abschottung des die Wälzkörper aufnehmenden Bahnraums von der Außenumgebung des erfindungsgemäßen Kupplungsausrücklagers zu erreichen, ist gemäß einem besonderen Aspekt der vorliegenden Erfindung in einem Inneneckbereich des den äußeren Ringsteg bildenden Laufrings eine Ringdichtung eingesetzt, die eine Dichtlippe bildet. Diese Dichtlippe ist vorzugsweise so gestaltet, dass diese den vom vorgenannten äußeren Ringsteg umgriffenen, inneren Ringsteg kontaktiert. Es ist dabei insbesondere möglich, die Dichtlippe so zu gestalten, dass diese eine Innenumfangsfläche des inneren Ringstegs kontaktiert. Hierdurch ergeben sich hinsichtlich der Vermeidung des Schmierstoffaustritts, sowie auch hinsichtlich der Vermeidung des Zutritts von Verunreinigungen vorteilhafte Relativbewegungen im Anlagebereich der Dichtlippe an der zugeordneten Gegenlauffläche. Diese von der Dichtlippe kontaktierte Lauffläche ist vorzugsweise derart nachgearbeitet, dass ein besonders verschleißarmer Lauf der Dichtlippe auf dieser Kontaktfläche erreicht wird. Diese Nachbearbeitung kann insbesondere im Rahmen der Nachbearbeitung der Laufrille des entsprechenden Laufrings erfolgen.

Gemäß einem weiteren, besonderen Aspekt der vorliegenden Erfindung ist zudem eine Führungseinrichtung vorgesehen zur radialen Führung der Käfigeinrichtung. Diese Führungseinrichtung kann insbesondere als durch Tiefziehumformung gefertigtes Ringelement ausgeführt sein. Dieses Ringelement ist vorzugsweise unter einem hinreichend ausgeprägten Presssitz an dem zugeordneten Laufring fixiert. Die Führungseinrichtung kann so gestaltet sein, dass die die Käfigeinrichtung führende Umfangswandung zugleich eine Ringwand bildet, die den Innenumfangsbereich des Bahnraumes weitgehend nach innen abdeckt. An der Führungseinrichtung kann ebenfalls eine Dichtlippe angebunden sein, die als solche den relativ zur Führungseinrichtung umlaufenden Laufring kontaktiert. Der so abgeschottete Lagerinnenraum ist vorzugsweise mit einer hydrophoben hochviskosen und Notschmierungsbeigaben enthaltenden Schmierstofffüllung befrachtet.

Die Käfigeinrichtung und die Schmierstofffüllung sind vorzugsweise so gestaltet, dass diese eine relativ hohe Temperaturbeständigkeit aufweisen. Die Käfigeinrichtung ist vorzugsweise aus einem hochtemperaturbeständigen Kunststoffmaterial oder gegebenenfalls auch aus einem Metallmaterial, oder als Metall-Kunststoff Verbundbauteil gefertigt. Die Schmierstofffüllung kann so gestaltet sein, dass diese nach Ablauf der geforderten Normalbetriebs-Lagerlebensdauer noch einen relativ lang anhaltenden Notschmierungseffekt bietet.

### Kurze Beschreibung der Figuren

Weitere Einzelheiten und Merkmale der Erfindung ergeben sich aus der nachfolgenden Beschreibung in Verbindung mit der Zeichnung. Es zeigt:
- **Figur 1a**: eine Axial-Schnittansicht zur Veranschaulichung des Aufbaus eines erfindungsgemäßen Kupplungsausrücklagers,
- **Figur 1b**: eine Draufsicht auf eine erfindungsgemäße Käfigeinrichtung;
- **Figur 2**: eine perspektivische Darstellung der Käfigeinrichtung nach Figur 1b.

### Ausführliche Beschreibung der Figuren

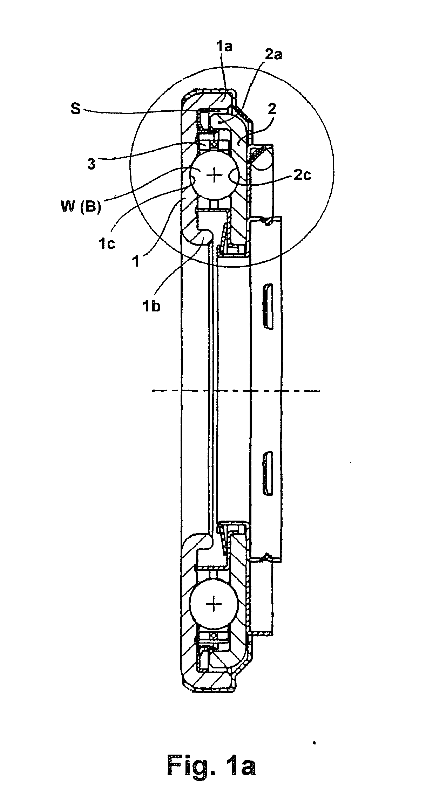

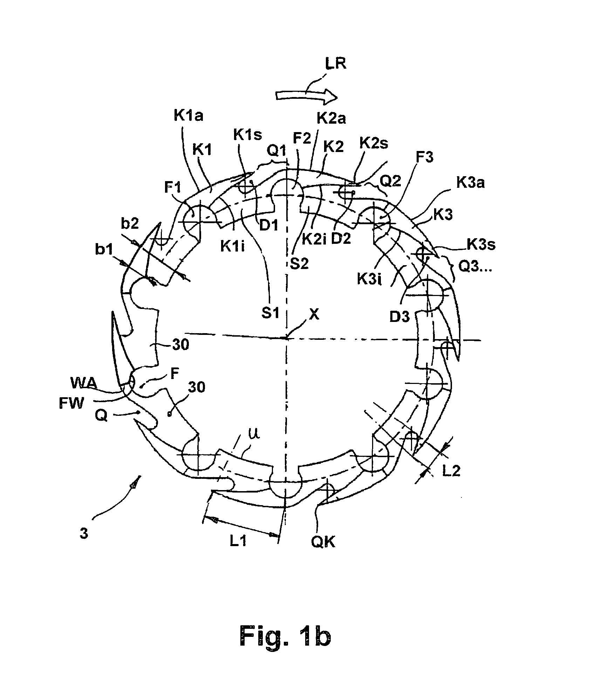

Figur 1 zeigt ein Kupplungsausrücklager für eine Kupplungseinrichtung. Dieses Kupplungsausrücklager umfasst einen ersten Lagerlaufring 1, der als flache Ringscheibe ausgeführt ist sowie einen zweiten, ebenfalls als flache Ringscheibe ausgeführten zweiten Lagerlaufring 2.

Das Kupplungsausrücklager umfasst weiterhin Wälzkörper W, die in einem zwischen dem ersten Lagerlaufring 1 und dem zweiten Lagerlaufring 2 definierten Bahnraum B aufgenommen sind. Die Wälzkörper W sind innerhalb des Bahnraums B durch eine Käfigeinrichtung 3 geführt. An dem ersten Lagerlaufring 1 ist im Außenumfangsbereich desselben ein erster Ringsteg 1a ausgebildet. Auch an dem zweiten Lagerlaufring 2 ist im Außenumfangsbereich desselben ein zweiter Ringsteg 2a ausgebildet. Beide Ringstege 1 a, 2a sind so gestaltet, dass sich diese in einem den Bahnraum B umsäumenden Umfangsbereich unter Belassung eines Laufspalts S axial überlappen.

Bei dem hier gezeigten Ausführungsbeispiel ist der erste Laufring 1 als Umformteil aus einem Blechmaterial gefertigt. Die Ausbildung des äußeren Ringstegs 1a erfolgt hierbei im Rahmen eines Tiefzieh- oder Pressumformvorganges im Zusammenspiel mit einem entsprechenden Untergesenk sowie einem entsprechenden Pressstempel. Im Rahmen dieses Umformvorganges kann an dem ersten Laufring 1 auch ein zweiter, die Innenumfangskante bildender Innensteg 1b gefertigt werden. Bei dem hier gezeigten Ausführungsbeispiel ist auch der zweite Laufring 2 als Umformteil aus einem Blechmaterial gefertigt. An beiden Laufringen 1, 2 ist jeweils eine Laufrille 1 c, 2c gebildet, auf welcher die als Kugeln ausgeführten Wälzkörper W entsprechend abrollen. Diese Laufrillen 1 c, 2c werden vorzugsweise ebenfalls im Rahmen der zur Bildung der Ringstege 1 a, 1b bzw. 2a führenden Umformung des Blech-Ausgangmateriales durch Pressumformung gefertigt. Es ist möglich, diese Laufrillen 1 c, 2c durch Einpressen eines Pressstempels herbeizuführen, wobei durch die hierbei erreichte Materialverlagerung im Randbereich der jeweiligen Laufrille 1 c, 2c noch kleine Rand-Ringwulste erzeugt werden können, die als solche die Lagerlaufringe 1, 2 einerseits aussteifen und zudem zu einer weiteren Verbreiterung der Laufrillen 1 c, 2c in radialer Richtung beitragen. Die derart durch Umformverfahren gefertigten Laufringe 1, 2 werden vorzugsweise einer Wärmebehandlung, insbesondere einem Härteverfahren unterzogen. Die derart, vorzugsweise äußerst verzugsarm wärme- und gefügebehandelten Laufringe können nachfolgend im Rahmen eines Endbearbeitungsvorganges geschliffen und endbearbeitet werden.

Die radiale Führung des Käfigs 3 erfolgt über den an einen der Laufringe 1, 2 angesetzten Winkelring, der zugleich auch als Spaltdichtung die innere Abdichtung des Lagers übernimmt. Der Fettaustritt am Außenbereich des Lagers wird durch eine Radialdichtung bewerkstelligt, die vorzugsweise in den umlaufenden Lagerring eingepresst ist, wobei die Dichtlippe derselben als schleifende Dichtung gegen die Dichtfläche in der Bohrung des stehenden Ringes wirkt.

Dieses Kupplungsausrücklager zeichnet sich insbesondere durch die in Figur 1b dargestellte besondere Gestaltung der Käfigeinrichtung 3 aus.

Wie aus Figur 1b ersichtlich ist die Käfigeinrichtung 3 durch einen Ringkörper 30 gebildet ist, in dessen äußerem Randbereich eine Keilkette angeordnet ist die mehrere unter Belassung von Fettdurchtrittsquerschnitten Q1, Q2, Q3... abfolgende Keile K1, K2, K3... umfasst, wobei jeder Keil K1, K2, K3... außenseitig von einer Keilaußenwand K1 a, K2a, K3a... und innenseitig von einer Keilinnenwand K1i, K2i, K3i... begrenzt ist und eine Keilspitze K1s, K2s, K3s bildet die in eine Lagerhauptlaufrichtung LR weist, wobei im Bereich der Keilspitzen K1s, K2s, K3s... der Ringkörper 30 jeweils mit einer nach außen zu den Fettdurchtrittsquerschnitten Q1, Q2, Q3 offenen und die Keilspitze K1 s, K2s, K3s... durchgängig untergreifenden Durchbrechung D1, D2, D3... versehen ist.

Die Keile K1, K2, K3... sind als relativ flache Keile ausgeführt. **Die Breite b1 der Keile an dem in die Fenster F1, F2, F3...** mündenden Fußbereich beträgt weniger als 60%, vorzugsweise weniger als 40% der Breite b2 des Ringkörpers 30. Jeder Fußbereich des Keils weist eine hintere, an den jeweiligen Durchtrittquerschnitt Q, Q1, Q2, Q3 angrenzende Abschlusswandung WA und einen an das jeweilige **Käfigfenster F, F1... abschnittsweise angrenzenden Fensterwandungsabschnitt FW auf.**

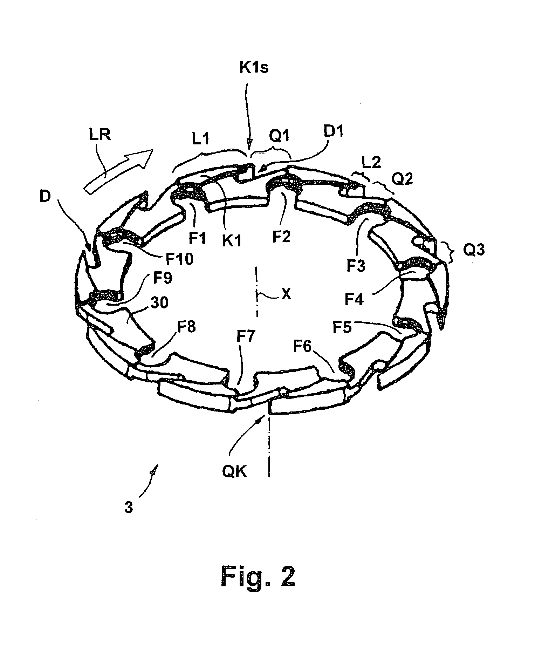

In Figur 2 ist in Form einer perspektivischen Darstellung der Aufbau der erfindungsgemäßen Käfigeinrichtung des Kupplungsausrücklagers noch weiter veranschaulicht. Die Ausführungen zu Figur 1b gelten insoweit sinngemäß.

Der Ringkörper 30 der Käfigeinrichtung 3 ist als relative flache Scheibenstruktur ausgeführt und, wie bereits angegeben, mit den zur Aufnahme der Wälzkörpern vorgesehenen Fensterabschnitten F1, F2 ... F10 versehen. Die **am** Außenumfang gemessene Umfangsweite der Fettdurchtrittsquerschnitte **Q1, Q2** beträgt vorzugsweise wenigstens 30% der am Außenumfang der Käfigeinrichtung gemessenen Umfangslänge L1 des Keils K1. Der im Bereich der Keilspitze K1 s zwischen der Keilaußenwand K1 a und der Keilinnenwand K1i eingeschlossene Keilspitzenwinkel ist vorzugsweise kleiner als 40 Grad. Die den Keilspitzenbereich K1s untergreifende Durchbrechung D1 ist vorzugsweise derart tief ausgebildet, dass der diese Durchbrechung D1 frei überkragende Keilspitzenbereich K1s eine in Umfangsrichtung gemessene Keilspitzenlänge L2 aufweist, die in etwa 15 bis 30% der am Umfang des Keils K1 gemessenen Umfangslänge L1 der Keilaußenwand K1 a beträgt. Insgesamt ergibt sich durch die Keilkette eine Sägezahn-Struktur.

Die Durchbrechung D, D1 ist vorzugsweise so gestaltet, dass die Keilspitze K1s eine im wesentlichen parallel zur Umlaufachse X der Käfigeinrichtung ausgerichtete Kante QK bildet. Die Länge dieser Querkante QK entspricht vorzugsweise der Maximalbreite der Käfigeinrichtung 3 und ist vorzugsweise nur geringfügig geringer dimensioniert als die Breite des zwischen den Lagerringen des Lagers verbleibenden Bahnbereichs.

Durch die erfindungsgemäße Gestaltung der Käfigeinrichtung 3 wird es möglich, **an dieser Abschnitte zu bilden, die als Fördertaschen fungieren** und den nach außen abgedrängten Schmierstoff entgegen der Fliegkraftwirkung zu den Wälzkörpern zurücktransportieren.

## Patentansprüche

1. Kupplungsausrücklager mit:
- einem ersten Lagerlaufring (1) der als flache Ringscheibe ausgeführt ist,
- einem zweiten Lagerlaufring (2) der ebenfalls als flache Ringscheibe ausgeführt ist,
- Wälzkörpern (W) die in einem zwischen dem ersten Lagerlaufring (1) und dem zweiten Lagerlaufring (2) definierten Bahnraum (B) aufgenommen sind, und
- einer Käfigeinrichtung (3) die durch einen Ringkörper gebildet ist, wobei der Ringkörper mehrere in Umfangsrichtung abfolgende Wälzkörperfenster aufweist, zur Führung der Wälzkörper (W) innerhalb des Bahnraumes (B), **dadurch gekennzeichnet, dass** im äußeren Randbereich des Ringkörpers eine Keilkette aus mehreren in Umfangsrichtung abfolgenden Keilen (K1, K2, K3) ausgebildet ist, zwischen denen jeweils eine Fördertasche mit Fettdurchtrittsquerschnitten (Q₁, Q₂, Q₃) zwischen dem Außenumfang des Randbereichs und einem Käfigfenster (F, F1, F2, F3) ausgebildet ist, wobei jeder Keil (K1, K2, K3) außenseitig von einer Keilaußenwand (K1a, K2a, K3a) und innenseitig von einer Keilinnenwand (K1i, K2i, K3i) begrenzt ist und eine Keilspitze (K1s, K2s,K3s) bildet, die in eine Lagerhauptlaufrichtung (LR) weist, wobei im Bereich der Keilspitze (K1s, K2s,K3s) der Ringkörper (30) mit einer nach außen offenen und die Keilspitze (K1s, K2s,K3s) untergreifenden Durchbrechung (D1, D2, D3) versehen ist.

2. Kupplungsausrücklager nach Anspruch 1, **dadurch gekennzeichnet, dass** die Wälzkörper (W) als Kugeln ausgeführt sind.

3. Kupplungsausrücklager nach Anspruch 1 oder 2, **dadurch gekennzeichnet, dass** die Innenumfangswand des Ringkörpers (30) im Bereich der Wälzkörperfenster (F1, F2, F3) durchbrochen ist.

4. Kupplungsausrücklager nach wenigstens einem der Ansprüche 1 bis 3, **dadurch gekennzeichnet, dass** der Ringkörper (30) eine in Axialrichtung gemessene Dicke aufweist die geringer ist als der axiale Überstand der Keile (K1, K2, K3) über die die Fettdurchtrittsquerschnitte begrenzenden Ringkörperseitenflächen.

5. Kupplungsausrücklager nach wenigstens einem der Ansprüche 1 bis 4, **dadurch gekennzeichnet, dass** die Käfigeinrichtung aus einem Kunststoffmaterial gefertigt ist.

6. Kupplungsausrücklager nach Anspruch 5, **dadurch gekennzeichnet, dass** das Kunststoffmaterial ein PA66 GF25 Kunststoff ist.

7. Kupplungsausrücklager nach wenigstens einem der Ansprüche 1 bis 6, **dadurch gekennzeichnet, dass** die Käfigeinrichtung auf einem Innenführungsring geführt ist.

8. Kupplungsausrücklager nach wenigstens einem der Ansprüche 1 bis 7, **dadurch gekennzeichnet, dass** der Innenführungsring an einem der Laufringe zentriert ist.

9. Kupplungsausrücklager nach wenigstens einem der Ansprüche 1 bis 8, **dadurch gekennzeichnet, dass** der Innenbereich des Lagers durch eine Dichtungseinrichtung abgedichtet ist.

10. Kupplungsausrücklager nach wenigstens einem der Ansprüche 1 bis 9, **dadurch gekennzeichnet, dass** die Käfigeinrichtung derart dimensioniert ist, dass deren axiale Breite auf Höhe der Keile lediglich geringfügig kleiner ist, als die axiale Weite des zwischen den Innenflächen der Laufringe verbleibenden Ringraums.

11. Kupplungsausrücklager nach wenigstens einem der Ansprüche 1 bis 10, **dadurch gekennzeichnet, dass** an dem ersten Lagerlaufring (1) im Außenumfangsbereich ein erster Ringsteg (1a) ausgebildet ist, und dass an dem zweiten Lagerlaufring (2) ebenfalls im Außenumfangsbereich desselben ein zweiter Ringsteg (2a) ausgebildet, wobei beide Ringstege (1a, 2a) so angeordnet und dimensioniert sind, dass sich diese in einem den Bahnraum (B) umsäumenden Umfangsbereich unter Belassung eines Laufspaltes (S) überlappen.

## Claims

1. Clutch release bearing, with:
- a first bearing raceway (1) which is designed as a flat annular disc,
- a second bearing raceway (2) which is likewise designed as a flat annular disc,
- rolling bodies (W) which are received in a track space (B) defined between the first bearing raceway (1) and the second bearing raceway (2),
and
- a cage device (3) which is formed by an annular body, the annular body having a plurality of circumferentially successive rolling-body apertures for guiding the rolling bodies (W) within the track space (B), **characterized in that**, in the outer marginal region of the annular body, a wedge chain is formed, which is composed of a plurality of circumferentially successive wedges (K1, K2, K3), between which a conveying pocket with grease passage cross sections (Q₁, Q₂, Q₃) is formed in each case, between the outer circumference of the marginal region and a cage aperture (F, F1, F2, F3), each wedge (K1, K2, K3) being delimited on the outside by a wedge outer wall (K1a, K2a, K3a) and on the inside by a wedge inner wall (K1i, K2i, K3i) and forming a wedge tip (K1s, K2s, K3s) which points in the bearing main running direction (LR), the annular body (30) being provided in the region of the wedge tip (K1s, K2s, K3s) with an outwardly open perforation (D1, D2, D3) reaching under the wedge tip (K1s, K2s, K3s).

2. Clutch release bearing according to Claim 1, **characterized in that** the rolling bodies (W) are designed as balls.

3. Clutch release bearing according to Claim 1 or 2, **characterized in that** the inner circumferential wall of the annular body (30) is perforated in the region of the rolling-body apertures (F1, F2, F3).

4. Clutch release bearing according to at least one of Claims 1 to 3, **characterized in that** the annular body (30) has a thickness, measured in the axial direction, which is smaller than the projecting axial length of the wedges (K1, K2, K3) beyond the annular-body side faces delimiting the grease passage cross sections.

5. Clutch release bearing according to at least one of Claims 1 to 4, **characterized in that** the cage device is manufactured from a plastic material.

6. Clutch release bearing according to Claim 5, **characterized in that** the plastic material is a PA66 GF25 plastic.

7. Clutch release bearing according to at least one of Claims 1 to 6, **characterized in that** the cage device is guided on an inner guide ring.

8. Clutch release bearing according to at least one of Claims 1 to 7, **characterized in that** the inner guide ring is centred on one of the raceways.

9. Clutch release bearing according to at least one of Claims 1 to 8, **characterized in that** the inner region of the bearing is sealed off by means of a sealing device.

10. Clutch release bearing according to at least one of Claims 1 to 9, **characterized in that** the cage device is dimensioned in such a way that its axial width level with the wedges is only slightly smaller than the axial breadth of the annular space remaining between the inner faces of the raceways.

11. Clutch release bearing according to at least one of Claims 1 to 10, **characterized in that** a first annular web (1a) is formed on the first bearing raceway (1) in the outer circumferential region, and **in that** a second annular web (2a) is formed on the second bearing raceway (2) likewise in the outer circumferential region of the latter, the two annular webs (la, 2a) being arranged and dimensioned such that, while at the same time leaving a running gap (S), they overlap one another in a circumferential region bordering the track space (B).

## Revendications

1. Butée de débrayage comprenant :
- une première bague de roulement (1) qui est réalisée sous forme de disque annulaire plat,
- une deuxième bague de roulement (2) qui est également réalisée sous forme de disque annulaire plat,
- des corps de roulement (W) qui sont logés dans un espace formant chemin de roulement (B) défini entre la première bague de roulement (1) et la deuxième bague de roulement (2) et
- un dispositif formant cage (3) qui est formé par un corps annulaire, le corps annulaire comprenant plusieurs fenêtres de corps de roulement se succédant dans la direction périphérique, pour le guidage des corps de roulement (W) à l'intérieur de l'espace formant chemin de roulement (B), **caractérisée en ce qu**'une chaîne de coins constituée de plusieurs coins (K1, K2, K3) se succédant dans la direction périphérique est réalisée dans la région de bord extérieure du corps annulaire, entre lesquels coins est réalisée à chaque fois une poche d'amenée présentant des sections transversales de passage de graisse (Q1, Q2, Q3) entre la périphérie extérieure de la région de bord et une fenêtre de cage (F, F1, F2, F3), chaque coin (K1, K2, K3) étant limité du côté extérieur par une paroi extérieure de coin (K1a, K2a, K3a) et du côté intérieur par une paroi intérieure de coin (K1i, K2i, K3i) et formant une pointe de coin (K1s, K2s, K3s) qui est orientée dans un sens de rotation principal du palier (LR), le corps annulaire (30) étant pourvu, dans la région de la pointe de coin (K1s, K2s, K3s), d'un orifice (D1, D2, D3) ouvert vers l'extérieur et s'étendant en dessous de la pointe de coin (K1s, K2s, K3s).

2. Butée de débrayage selon la revendication 1, **caractérisée en ce que** les corps de roulement (W) sont réalisés sous forme de billes.

3. Butée de débrayage selon la revendication 1 ou 2, **caractérisée en ce que** la paroi périphérique intérieure du corps annulaire (30) est interrompue dans la région des fenêtres de corps de roulement (F1, F2, F3).

4. Butée de débrayage selon au moins l'une quelconque des revendications 1 à 3, **caractérisée en ce que** le corps annulaire (30) présente une épaisseur, mesurée dans la direction axiale, qui est inférieure à l'avancée axiale des coins (K1, K2, K3) au-delà des surfaces latérales de corps annulaire délimitant les sections transversales de passage de graisse.

5. Butée de débrayage selon au moins l'une quelconque des revendications 1 à 4, **caractérisée en ce que** le dispositif formant cage est fabriqué en une matière plastique.

6. Butée de débrayage selon la revendication 5, **caractérisée en ce que** la matière plastique est un plastique PA66 GF25.

7. Butée de débrayage selon au moins l'une quelconque des revendications 1 à 6, **caractérisée en ce que** le dispositif formant cage est guidé sur une bague de guidage intérieure.

8. Butée de débrayage selon au moins l'une quelconque des revendications 1 à 7, **caractérisée en ce que** la bague de guidage intérieure est centrée sur l'une des bagues de roulement.

9. Butée de débrayage selon au moins l'une quelconque des revendications 1 à 8, **caractérisée en ce que** la région intérieure du palier est rendue étanche au moyen d'un dispositif d'étanchéité.

10. Butée de débrayage selon au moins l'une quelconque des revendications 1 à 9, **caractérisée en ce que** le dispositif formant cage est dimensionné de telle sorte que sa largeur axiale à hauteur des coins ne soit que légèrement inférieure à l'étendue axiale de l'espace annulaire restant entre les surfaces intérieures des bagues de roulement.

11. Butée de débrayage selon au moins l'une quelconque des revendications 1 à 10, **caractérisée en ce qu**'une première nervure annulaire (1a) est réalisée sur la première bague de roulement (1) dans la région périphérique extérieure et en ce qu'une deuxième nervure annulaire (2a) est réalisée sur la deuxième bague de roulement (2), également dans la région périphérique extérieure de celle-ci, les deux nervures annulaires (la, 2a) étant disposées et dimensionnées de telle sorte qu'elles se chevauchent dans une région périphérique bordant l'espace formant chemin de roulement (B) en laissant un interstice de roulement (S).
